# EUROPEAN PATENT APPLICATION

(11) **EP 0 581 748 A1**
(43) Date of publication of application: **02.02.1994**
(21) Application number: 93830343.5
(22) Date of filing: 30.07.1993
(51) Int. Cl.: A23N 1/02, C11B 1/04

(54) **Machine and method for the production of olive-oil without crushing the stones**

(30) Priority: 31.07.1992 IT RM920586
(71) Applicant: INN.TEC S.r.l., I-00193 Roma (IT)
(72) Inventor: Vitti, Antonio, c/o INN. TEC, I-00193 Roma (IT)
(74) Representative: Iannone, Carlo Luigi

(57) **Abstract**

The invention concerns a machine and a process for the production of olive-oil without crushing stones, wherein the extraction of the oil is obtained using water.

## Description

The present invention relates to a machine and to a process for the production of olive-oil without crushing the stones.

As it is well known, the extraction of olive-oil has been up to now realized substantially by means of systems based on the pressure working of olive pastes or on the centrifugation working of the same pastes.

The method involving pressure of the pastes is surely the eldest one and it is the only one extensively employed until '60. It allows to extract oil from olives by the following operations:
· olives crushing by millstones, crushing the stones too and obtaining the olive paste;
· pressing of the olive paste at 300-400 bar, obtaining a oily must from which the oil is obtained by natural decantation or by centrifugation.

Alternatively to the crushing by millstones, it is possible to crush the olive by mechanical crushers, crushing also the stones, and to subject the pastes so obtained to a mixing within thermoregulated machines that, because of the combined effect of the heat and of the mechanical action, promotes the coalescence of the oil (kneading machines).

A more recent method is without any doubt the one providing the centrifugation of pastes.

Said method, that is progressively replacing the previous one, provides the following operations:
· crushing of the olives by mechanical crushers, crushing also the olive stones;
· kneading of the pastes by kneading machines that, providing heat and a slow motion of the paste, bring to the coalescence of the oil originally contained in the olives and with a too much fine granulometry to be extracted;
· direct centrifugation of the pastes previously diluted by hot water obtaining solid residuals (olive husk), vegetation water with little oil and oil with little vegetation water;
· separated centrifugation of the two liquid phases obtained from the paste centrifugation to separate the oil.

Other methods for the production of oil have also been proposed more or less recently, but they have not been extensively used.

One of said methods is the one providing the selective percolation. It was used rather diffusely and provides the preparation of the pastes by the usual crushers or kneading machines and the extraction by extracting machines that subject the paste to the action of a large number of steel blades, said blades sinking with an alternative motion within the paste and covering with oil (which adheres to the steel more easily than water), oil the is detached from the blade by scraping and is then collected.

Another method is the one providing the separation by electrophoresis. It concerns a method that has been developed only at an experimental stage, and comprises the steps of:
· crushing the olives and kneading the pastes;
· dilution of the the pastes by hot water with a ratio 3:1 (paste/olives) obtaining an homogeneous mixture;
· separation of the oil by floating obtained subjecting the mixture water/paste to the passage of Direct Current that by electrophoresis determines the deemulsification of the oil that is available after a certain time at the head of the electrophoresis tanks.

Really, such a method has been abandoned.

A last method already known about which is worth to shortly discuss is the chemical method of separation.

It has been studied at the beginning of the XX century and stopped during the prototopization step.

The working steps were the following:
· crushing by millstones the olives, crushing also the stones;
· dilution of the pastes with alkali additivivated water within suitable tanks provide with steam heaters;
· standing within said tanks to separate the oil, phase that lasted many hours.

Such a method has been abandoned although it has the merit to have first opened a way to research on which the modern method of centrifugation of pastes is based. All the abovementioned work methods involve systems and machine arrangements always very expensive since both the stone crushing and the pastes centrifugation or the pressing of the same pastes involves very high mechanical stresses of the machines, that consequently are very heavy, and must be realized employing resistant materials and very accurate workings. In conclusion, they are very expensive.

The Applicant has now conceived and realized a machine and a method for the production of olive-oil without crushing the stones.

It is therefore an object of the Applicant that of obtaining oil without crushing the stones that, as it is well known, vitiates the final production.

It is another object of the present invention that of providing a machine that can be realized at low costs, and is soundless and little encumbering, and operating in a substantially automatic way.

These and other objects are obtained according to the present invention giving the technical teachings for the extraction of oil using water.

It is therefore a specific object of the present invention a machine for the production of oil without crushing the stones, comprising:
· a kneading receptacle, provided with stone extracting means, vegetation water extraction means, fixed peripheral means to contrast the motion of the olives to be kneaded and mix sprinkling means;
· a mixing tool, driven by motor means, shaped in such a way to make the mix assuming a peripheral upward motion and a central downward motion, and to cut the olive pulp;
· a water container, disposed in such a way to exchange heat with said kneading receptacle, provided with vegetation water evacuation means and coupling means for connection with pump means;
· a filter and sub-filter assembly, provided within said water container; and
· a weir for the passage of a desired amount of mix from the kneading receptacle to the water container.

According to the invention, said mixing tool can have a vertical axis, in this case the kneading receptacle having a cylindrical shape, or can have an horizontal axis, in this case the kneading receptacle having a U cross-section.

Preferably, according to the invention, said mixing tool comprises three sectors, a lower sector that creates a radial and upward peripheral motion of the paste, an intermediate sector, having cutting blades cooperating with the abovementioned contrast means, and an upper sector that conveys the paste toward the centre creating an downward central motion of the paste.

The tool will be driven by an electric motor, with a reduction unit interposed so that it rotates at 60 rpm.

Within said water container preferably a mixture with a ratio 1:3 is contained, and a heat exchange is provided with the kneading receptacle.

Heating of olives within the kneading receptacle can also be realized separately, before starting the kneading, or by electrical heaters.

Again according to the invention, said filter intercepts light solids coming from the weir and have the filtering surface sloped at about 30°.

Further, said sub-filter comprises a metallic surface that collects fluids arriving from the filter and sends them to the water container.

Moreover, the machine according to the invention can be provided with an electronic controller that allows to automatize the work cycle.

Furthermore, in case of very little machines, it can be advisable to employ for the extraction water without recirculation; such an alternative cannot be used for energetic reasons with medium or big machines (from 20 Kg/charge), but for little machines it would allow to realize very simple machines under a constructive point of view and machines less encumbering and expensive.

It is also an object of the present invention that of providing a method for the extraction of oil without crushing the stones, comprising the steps of:
· kneading the olives in a thermoregulated room without crushing the stone, obtaining an homogeneous and completely granulated paste at about 40 ÷ 45°C, because of the combined action of the temperature, of the mechanical stirring and of the motion of metallic surfaces within the paste;
· extracting the oil by circulation of hot water at about 40 ÷ 45 °C, with a ratio water:paste of 3:1, filtering the paste by gravity in the water where the separation of water and oil occurs.

With respect to the already known methods, the method according to the invention has the advantage that the kneading is obtained by cutting tools in a thermoregulated room and without the crushing of the stone: such an operation is absolutely new either with respect to the existing machines or with respect to the past and no more used machine; all the machines known to prepare pastes without crushing the stone provided either the removing of the stone of the olives and the subsequent kneading or the milling with millstones controlling the gap between the millstones and the workplane (sleeper); none machine until now can produce braked paste without involving the stones or without the preceding removing of the stones.

Further, the machine according to the invention allows to obtain the separation of the oil from pastes with recycle of vegetation water between the paste receptacle and the water container by the interposition of filter and sub-filter.

The present invention will be now described according its preferred embodiments, with particular reference to the figures of the enclosed drawings, wherein:
figure 1 is a side view, partially cut-away, of the machine according to the invention;
figure 2 is a top view of the machine of figure 1;
figure 3 is a front view of the machine of figure 1;
figure 4 is a schematic view of the tool of the machine according to the invention; and
figure 5 is an exploded view of the tool of figure 4.

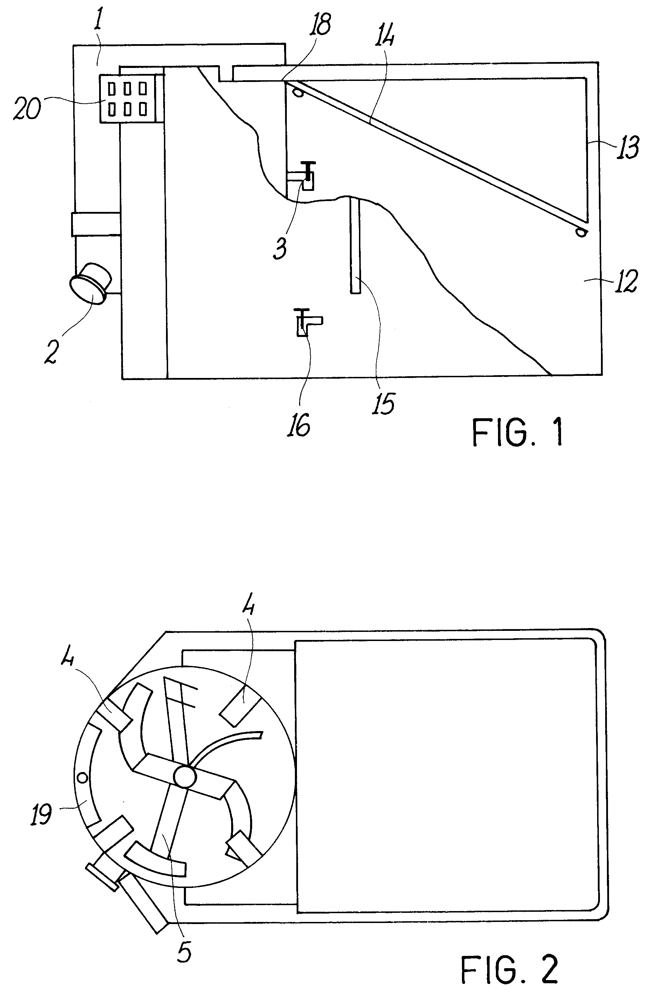

The machine according to the invention shown in the enclosed figures 1-5, provides a cylindrical kneading receptacle 1, having a plug 2 to extract the stones and a cock 3 to extract vegetation water. Within the kneading receptacle 1, and rigidly connected to the same, there are some contrasting elements 4, provided in order to aid the operation of the tool.

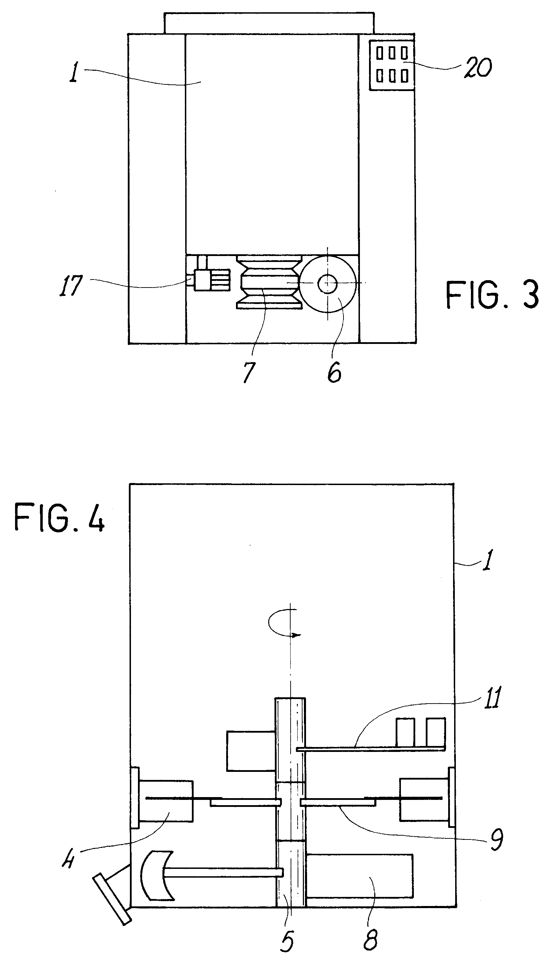

The tool 5 is driven by an electric motor 6 having interposed a mechanical reduction unit (see figure 3) having such a reduction ratio to determine a rotation speed of the tool of about 60 rpm. The tool 5 comprises a lower section 8, shaped in such a way to create a radial motion and an upward motion of the paste from an intermediate section 9, which comprises blades 10 cutting the pulp of the olives mainly when passing through the contrasting fixed elements and contribute to the coalescence of the oil by the so called "Acapulco" effect, and an upper section 11, having the goal of breaking the peripheral upward column of the paste, conveying the paste toward the centre of the receptacle 1 and creating a downward motion of the paste in the central zone. Furthermore, the tool 5 creates, during the extraction phase, a convective motion of the flowable mass so that the release of the oil is facilitated.

The machine according to the invention further comprises a water container 12. Said container 12 is filled with water with a ratio 3:1 with respect to the olives and exchanges heat with the kneading receptacle 1 through the separation surface. A filter 13 and a sub-filter 14 are further provided within the container 12, and said container 12 is equipped with a transparent level gauge 15, a cock 16 for the extraction of vegetative water and with a coupling 17 for the pump.

The filter 13 intercepts the light solids arriving from the weir 18 during the extraction phase and has a filtering surface sloped at about 30° with respect to the horizontal plane, in order to be efficient during the entire extraction phase.

The sub-filter 14 comprises a metallic surface collecting the fluids arriving from the filter 13 and conveys them within the container 12: the metallic surface of the sub-filter 14 has a basic role for the extraction since it contributes to the coalescence of the oil (Acapulco effect).

The weir 18 is realized in such a way that it determines a useful volume of the kneading receptacle 1 corresponding to the double of the paste volume contained within the same, and determines the fluid speed so that the filter 13 has a good self-cleaning effect: such a function is basic for the efficiency of the filter 13 and consequently of the machine.

The numerical reference 19 indicates a sprinkler provided within the kneading receptacle 1, that, during the extraction, diffuses water in the receptacle 1 so as to create a surface laminar flow toward the weir 18: such a function is important for the efficiency of the extraction.

The machine according to the invention is controlled by an electronic controller 20 that allows to realize the work cycle according to the pre-set timing.

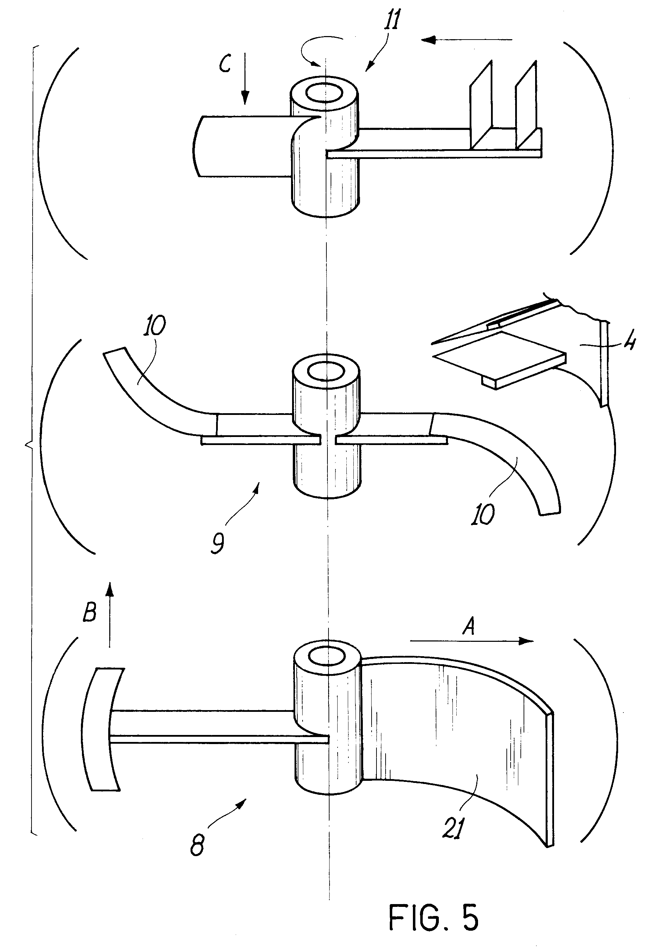

Using the machine according to the invention, a work method providing substantially the following phases is actuated:
· KNEADING: during this phase, the kneading of the olives in a thermoregulated room without crushing the stone is realized; the final temperature of the paste must be of about 40 ÷ 45. At the end of this step, lasting about one hour, the paste obtained will be homogeneous and completely kneaded, i.e. the oil is completely deemulsified owing to the combined action of the temperature, of the mechanical stirring and of the continuos motion of metallic surfaces in the middle of the paste that realizes a strong deemulsifying action. In this operative mode, the kneading comprises the action of the tool 5, having cutting surfaces and control surfaces. The effects of such an action are the following:
   - progressive cutting of the olive pulp alone by cutting means 10 helped by contrasting elements 4;
   - motion of the paste that is subjected to a complex motion having a tangential component (arrow A, figure 5) with respect to the kneader axis, a peripheral upward motion (arrow B, figure 5), composing with said tangential component, and a downward motion (arrow C, figure 5) toward the centre: the combination of said motions permits that all the olives are cut and more than once pass under the action of the cutting parts 11, and that a sufficient mixing of the mass is obtained to present always new material towards the radian surfaces, and
   - a deemulsifying action obtained by the continuos wiping of the paste over metallic surfaces, that because of the different surface adhesion properties to the metals of water and oil determines the coalescence of the oil.
· EXTRACTION of the oil: said phase starts at the end of the kneading an is realized by circulation of hot water (40 ÷ 45 °C) between the container 12 (previously charged with water with a ratio 3:1 with respect to olive weight) and the kneading receptacle 1. The water moved by the pump and introduced within the kneading receptacle 1 through a diffuser 19 determines a progressive liquefaction of the paste, which is periodically stirred by the same mixing tool 5. Owing to the combined action of the introduction of the water and of the stirring of the paste at the head of the kneading receptacle 1, oil and light solid (typically olive skins) progressively floats and through the weir 18 reaches the filter 13 having a suitable mesh, said filter intercepting the solids and letting percolating the liquids (oil and vegetation water); said liquids are collected from a sub-filter 14 and pass by gravity within the water container 12 where the oil is separated from water by natural decantation. At the end of the extraction, lasting typically one hour, (previously removing the contents of the filter 13 and of the sub-filter 14) it is possible to collect oil that is floating over the vegetation water in the water container 12 and subsequently water contained within the container 12 can be discharged by the proper cock 16, water contained in the kneader 1 can be discharged through the other cock 3 and the stones through the plug 2.

During a production cycle, the machine is first actuated and then progressively charged with olives; at the same time, the machine is provided with hot water at a temperature of 40 ÷ 45 °C. The water temperature, within the above range, is suitable to heat the paste and to make an efficient extraction. At the end of the charge cycle of the machine with olives and hot water, the operator has nothing else to do, since the work cycle is automatically performed, controlled by the electronic controller 20. During the first work hour, the machine kneads the olives; during the second work hour it will take place the oil extraction that, as already said, will be realized by the circulation of water between the water container 12 and the kneading receptacle 1. The separation of the oil will be obtained by the tool 5 that moves the paste and determines the separation of oil and of the light solids towards the free surface of the container and the precipitation of the stones. At the end of the extraction, the machine automatically switches off. When the machine is switched off, the following operation are performed:
· oil collection by a hand tool;
· discharge of the vegetation water from the container 12 through the cock 16;
· discharge of the vegetation water from the kneading receptacle 1 through the cock 3;
· discharge of the stones from the kneading receptacle 1 opening the plug 2: this operation can be facilitated by the motor actuated by the proper button.

The present invention has been described with particular reference to some preferred embodiments, but it is to be understood that changes and/or modification can be introduced by those skilled in the art without departing from the scope of the invention, as defined by the appended claims.

## Claims

1. Machine for the production of oil without crushing the stones, comprising:
· a kneading receptacle, provided with stone extracting means, vegetation water extraction means, fixed peripheral means to contrast the motion of the olives to be kneaded and mix sprinkling means;
· a mixing tool, driven by motor means, shaped in such a way to make the mix assuming a peripheral upward motion and a central downward motion, and to cut the olive pulp;
· a water container, disposed in such a way to exchange heat with said kneading receptacle, provided with vegetation water evacuation means and coupling means for connection with pump means;
· a filter and sub-filter assembly, provided within said water container; and
· a weir for the passage of a desired amount of mix from the kneading receptacle to the water container.

2. Machine according to claim 1, characterized in that said mixing tool has a vertical axis, the kneading receptacle having a cylindrical shape.

3. Machine according to claim 1, characterized in that said mixing tool has a horizontal axis, the kneading receptacle having a U cross-section.

4. Machine according to one of the preceding claims, characterized in that said mixing tool comprises three sectors, a lower sector that creates a radial and upward peripheral motion of the paste, an intermediate sector, having cutting blades cooperating with said contrast means, and an upper sector that conveys the paste toward the centre creating an downward central motion of the paste.

5. Machine according to one of the preceding claims, characterized in that said tool is driven by an electric motor, with a reduction unit interposed so that it rotates at 60 rpm.

6. Machine according to one of the preceding claims, characterized in that within said water container a mixture of water and paste with a ratio 1:3 is contained.

7. Machine according to one of the preceding claims, characterized in that the heating of olives is realized separately, before starting the kneading.

8. Machine according to one of the claims 1-6, characterized in that the heating of the olives is realized by electrical heaters.

9. Machine according to one of the preceding claims, characterized in that said filter intercepts light solids coming from the weir and have the filtering surface sloped at about 30°.

10. Machine according to one of the preceding claims, characterized in that said sub-filter comprises a metallic surface that collects fluids arriving from the filter and sending them to the water container.

11. Machine according to one of the preceding claims, characterized in that an electronic controller is provided that allows to automatize the work cycle.

12. Method for the extraction of oil without crushing the stones, comprising the steps of:
· kneading the olives in a thermoregulated room without crushing the stone, obtaining an homogeneous and completely granulated paste, because of the combined action of the temperature, of the mechanical stifling and of the motion of metallic surfaces within the paste;
· extracting the oil circulating hot water, with a ratio water:paste of 3:1, filtering the paste by gravity in the water where the separation of water and oil occurs.

13. Process according to claim 12, characterized in that said kneading gives a paste at about 40 ÷ 45°C.

14. Process according to one of the preceding claims 12 and 13, characterized in that the circulating water is at a temperature of about 40 ÷ 45°C.
